# EUROPEAN PATENT APPLICATION

(11) **EP 4 474 403 A1**
(43) Date of publication of application: **11.12.2024**
(21) Application number: 23749726.8
(22) Date of filing: 31.01.2023
(51) Int. Cl.: C08G 63/78, C08G 63/91

(54) **POLYESTER COPOLYMER PRODUCTION METHOD**

(30) Priority: 02.02.2022 JP 2022015231
(71) Applicant: Maxell, Ltd., Kyoto 618-8525 (JP)
(72) Inventor: GOTO, Toshiharu, Otokuni-gun, Kyoto 618-8525 (JP); SUN, Yin, Otokuni-gun, Kyoto 618-8525 (JP); SHINOMOTO, Sayaka, Otokuni-gun, Kyoto 618-8525 (JP)
(74) Representative: Mewburn Ellis LLP
(86) International application number: PCT/JP2023/002986
(87) International publication number: WO 2023/149410

(57) **Abstract**

A method of manufacturing a polyester copolymer is provided that is capable of producing a polyester copolymer in a shorter period of time than a method starting with monomers. A method of manufacturing a polyester copolymer includes: loading a chemical reactor with a material containing a first polyester resin and a second polyester resin, the second polyester resin being a polyester resin different from the first polyester resin; and heating the material to a temperature not lower than the melting point of that one of the polyester resins contained in the material which has the lowest melting point, and stirring the material.

## Description

### TECHNICAL FIELD

The present invention relates to a method of manufacturing a polyester copolymer.

### BACKGROUND ART

Polyester is a generic term for polymers, obtained by condensation polymerization of carboxylic acids with two or more carboxylic groups and alcohols with two or more hydroxyl groups, and is widely used for various applications due to its excellent properties.

Non-Patent Document 1 describes synthesizing copolymers of polybutylene succinate (PBS) and polylactic acid (PLA) with varying block lengths, and evaluating the performance of PBS/PLA composites as compatibilizers.

Further, a method of producing oligomers and/or macromonomers by decomposing polyester resin is known. For example, Japanese Patent No. 3444870 describes a method of depolymerizing polyethylene terephthalate. JP 2017-52892 A and JP 2017-52890 A each describe a method of producing a reclaimed oligomer by decomposing a matter being processed that contains a polyester-based resin to obtain a reclaimed oligomer. Japanese Patent No. 4174580 describes a method of producing a polyester macromonomer by chemically decomposing polyethylene terephthalate resin with glycol.

### PRIOR ART DOCUMENTS

### PATENT DOCUMENTS

[Patent Document 1] Japanese Patent No. 3444870
[Patent Document 2] JP 2017-52892 A
[Patent Document 3] JP 2017-52890 A
[Patent Document 4] Japanese Patent No. 4174580

### NON-PATENT DOCUMENTS

[Non-Patent Document 1] Wei Zhang, et. al., "Copolymer P(BS-co-LA) Enhanced Compatibility of PBS/PLA Composite", Journal of Polymers and the Environment, 26, pp. 3060-3068, 2018

### SUMMARY OF THE INVENTION

### PROBLEMS TO BE SOLVED BY THE INVENTION

Typically, a polyester copolymer is produced by esterifying various monomers to produce an oligomer that is a copolymer, and polymerizing this oligomer to achieve high molecular weight. However, producing a polyester copolymer from monomers requires a prolonged period of time.

A problem to be solved by the present invention is to provide a method of manufacturing a polyester copolymer that is capable of producing a polyester copolymer in a shorter period of time than a method starting with monomers.

### MEANS FOR SOLVING THE PROBLEMS

A method of manufacturing a polyester copolymer according to one embodiment of the present invention includes: loading a chemical reactor with a material containing a first polyester resin and a second polyester resin, the second polyester resin being a polyester resin different from the first polyester resin; and heating the material to a temperature not lower than a melting point of that one of the polyester resins contained in the material which has the lowest melting point, and stirring the material.

### EFFECTS OF THE INVENTION

The present invention enables producing a polyester copolymer in a shorter period of time than a method starting with from monomers.

### BRIEF DESCRIPTION OF THE DRAWINGS

[FIG. 1] FIG. 1 is a flow chart of a method of manufacturing a polyester copolymer according to a first embodiment of the present invention.
[FIG. 2] FIG. 2 is a flow chart of a method of manufacturing a polyester copolymer according to a second embodiment of the present invention.
[FIG. 3] FIG. 3 is a flow chart of a method of manufacturing a polyester copolymer according to a third embodiment of the present invention.
[FIG. 4] FIG. 4 is a flow chart of a method of manufacturing a polyester copolymer according to a fourth embodiment of the present invention.

### EMBODIMENTS FOR CARRYING OUT THE INVENTION

The present inventors found that heating two or more polyester resins and stirring them causes simultaneous decomposition and formation of ester bonds, thus providing a polyester copolymer. The present invention was made based on this finding. Now, embodiments of the present invention will be described in detail with reference to the drawings.

### [First Embodiment]

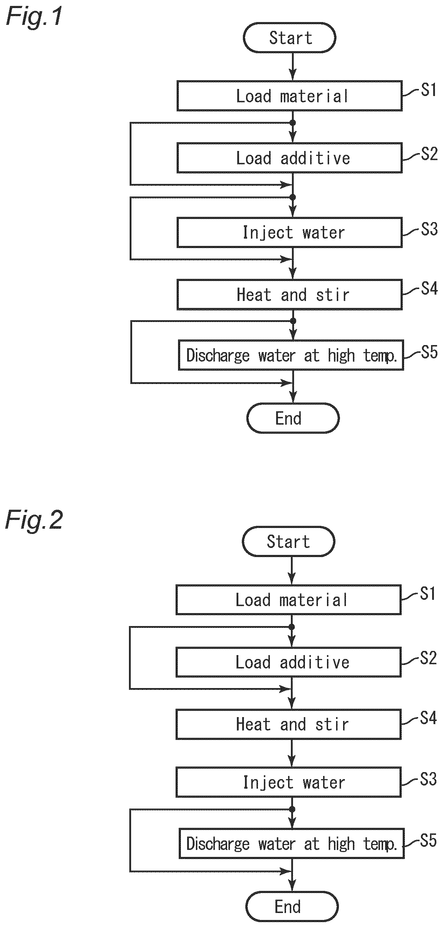

FIG. 1 is a flow chart of a method of manufacturing a polyester copolymer according to a first embodiment of the present invention. The manufacturing method includes: the step of loading a chemical reactor with a material constituted by two or more polyester resins (step S1); the step of loading an additive into the chemical reactor (step S2); the step of injecting water into the chemical reactor (step S3); the step of heating and stirring the material (hereinafter referred to as "decomposition step") (step S4); and the step of discharging water in the chemical reactor at a temperature not lower than 100 °C (step S5).

Of these steps, the step of loading an additive into the chemical reactor (step S2), the step of injecting water into the chemical reactor (step S3) and the step of discharging water in the chemical reactor at a temperature not lower than 100 °C (step S5) are optional steps, and may be omitted under some conditions.

Further, the step of loading the chemical reactor with a material constituted by two or more polyester resins (step S1), the step of loading an additive into the chemical reactor (step S2) and the step of injecting water into the chemical reactor (step 3) may be performed in any order. Although the method will be described below in the order of steps S1, S2 and S3, this is not intended to indicate the timeline of the steps. Further, two or more of these steps may be performed simultaneously. For example, the material and additive may be mixed in advance and then loaded in the chemical reactor.

Any chemical reactor capable of stirring a material in a heated state may be used for the method of manufacturing a polyester copolymer according to the present embodiment. It is preferable that the chemical reactor is capable of controlling the atmosphere within the reactor. Specifically, it is preferable that the chemical reactor has a construction that allows its interior to be hermetically sealed except for the loading port and the discharge port for material, the inlet port and the outlet port for gas (i.e., vent port), and the injection port for water, for example. The chemical reactor is preferably made of metal, glass or ceramic, and particularly preferably made of metal. As discussed further below, the chemical reactor may be a batch-type reactor or may be a continuous-type reactor.

The chemical reactor is loaded with a material constituted by two or more polyester resins (step S1). Specifically, the chemical reactor is loaded with a material containing a first polyester resin and a second polyester resin, the second polyester resin being a polyester resin different from the first polyester resin. It is preferable that the polyester resins constituting the material are pre-processed into powder or pellets. Alternatively, a pulverizer may be provided at the material-loading port of the chemical reactor such that the material is pulverized at the same time as the loading. The two or more polyester resins may be successively loaded, one at a time, or may be mixed in advance and loaded all at once.

Each of the polyester resins constituting the material (i.e., first and second polyester resins) may be any resin that includes an ester bond, and is not limited to any particular resin. Each of the polyester resins constituting the material preferably has a weight average molecular weight not less than 10,000, and more preferably not less than 50,000.

Each of the polyester resins may be a polyester resin where the ester bond and aromatic ring constituting the main chain of the polyester have no resonance structure (hereinafter referred to as "aliphatic polyester"). Although not limiting, the aliphatic polyester may be polylactic acid (PLA), polybutylene succinate (PBS), polybutylene succinate adipate (PBSA), polycaprolactone (PCL), polyhydroxybutyric acid (PHB), polyhydroxyalkanoate (PHA), polyglycolic acid (PGA), or 3-hydroxybutyrate-co-3-hydroxyhexanoate polymer (PHBH), for example. Preferable aliphatic polyesters are polylactic acid (PLA), polybutylene succinate (PBS), polybutylene succinate adipate (PBSA), and polycaprolactone (PCL).

Each of the polyester resins may be polyester resin where the ester bond and aromatic ring constituting the main chain of the polyester have a resonance structure (hereinafter referred to as "aromatic polyester"). Although not limiting, the aromatic polyester may be polyethylene terephthalate (PET), polybutylene terephthalate (PBT), polyethylene naphthalate (PEN), or polybutylene adipate naphthalate (PBAT), for example.

According to the present embodiment, it is preferable that at least one of the two or more polyester resins (e.g., the first polyester resin) is an aliphatic polyester. In such implementations, more preferably, the proportion of the aliphatic polyester in the two or more polyester resins is not lower than 50 mass %, and yet more preferably not lower than 70 mass %. In such implementations, another one of the two or more polyester resins (e.g., the second polyester resin) may be an aromatic polyester.

An additive is loaded into the chemical reactor (step S2). The additive is an additive that promotes decomposition of the polyester resins constituting the material. The step of loading an additive is an optional step; under some conditions, a polyester copolymer may be produced without adding an additive.

The additive is preferably one or more selected from the group consisting of an alkali metal salt, an alkaline earth metal salt, an oxide of an alkali metal, an oxide of an alkaline earth metal, Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group.

Examples of compounds containing a hydroxyl group include methanol, trimethylolpropane, glycerin, erythritol, pentaerythritol, glucose, alcohols with two or more hydroxyl groups, acrylic polyols, polyester polyols, polyether polyols, epoxy polyols, polyolefin-based polyols, fluorine-containing polyols, and polyvinyl alcohols (PVA).

Additives are classified into two categories: additives containing either an alkali metal or an alkaline earth metal, and others, i.e., additives containing neither an alkali metal nor an alkaline earth metal. Preferable additives containing either an alkali metal or an alkaline earth metal are sodium bicarbonate (i.e., baking soda), sodium carbonate, potassium carbonate, and magnesium oxide. Preferable additives containing neither an alkali metal nor an alkaline earth metal are Zn, Sn, zinc octylate, and tin octylate.

As discussed further below, in implementations where the polyester copolymer resulting from the decomposition step (step S4) is polymerized to achieve high molecular weight, use of an additive containing either an alkali metal or an alkaline earth metal leads to saponification, making it difficult to achieve high molecular weight. Specifically, use of an alkali metal such as Na carbonate requires the step of removing Na ions of the polyester using a stronger acid than the acid of a monomer. In view of this, if high molecular weight is to be achieved, it is preferable to use an additive that contains neither an alkali metal nor an alkaline earth metal.

The amount of the additive is preferably 0.2 to 100 parts by mass with respect to 100 parts by mass of the material. As used herein, the mass of the material refers to the sum of the masses of the two or more polyester resins loaded as the material. Further, the mass of the material is inclusive of the mass of water adsorbed on the material, and the mass of the additive is inclusive of the mass of water adsorbed on the additive. The value of (mass of additive (inclusive of mass of adsorbed water)) / (mass of material (inclusive of mass of adsorbed water)) × 100 will be hereinafter referred to as "additive concentration".

If the additive concentration is too low, the additive's effect of promoting decomposition is produced insufficiently. A lower limit of the additive concentration is more preferably 0.50 parts by mass, yet more preferably 1.0 parts by mass, and still more preferably 2.0 parts by mass. On the other hand, if the additive concentration is too high, large amounts of energy are required for heating. An upper limit of the additive concentration is more preferably 50 parts by mass, yet more preferably 20 parts by mass, and still more preferably 15 parts by mass.

Water is injected into the chemical reactor (step S3). The step of injecting water is an optional step; under some conditions, a polyester copolymer may be produced without adding water. Specifically, in implementations where an additive is used, small amounts of water adsorbed on the material and/or additive cause decomposition of the polyester resins to progress. As such, if an additive is used, a polyester copolymer can be produced without intentionally adding water into the chemical reactor. This reduces the amount of energy required to heat water. Preferable ranges of the amount of water in the chemical reactor will be specified further below.

In implementations where an additive is used and the polyester resins are to be decomposed using water adsorbed on the material and/or additive, the step of injecting water into the chemical reactor (step S3) may be replaced by the step of adjusting the water content of at least one of the material and additive. This enables adjusting the amount of water in the chemical reactor at the decomposition step (step S4), discussed further below.

Specific methods for adjusting water content include drying the material and additive using a drier, holding them in a thermo-hygrostat for a predetermined period of time, and wetting them using a spray, for example. Alternatively, the humidity at the loading port of the chemical reactor may be controlled to adjust the water content of the material and/or additive. Devices for controlling the humidity at the loading port of the chemical reactor include air conditioners and sprayers.

The material is heated and stirred (step S4; decomposition step). The heating temperature is to be not lower than the melting point of that one of the two or more polyester resins constituting the material which has the lowest melting point. The higher the heating temperature, the more easily the reaction progresses. A lower limit of the heating temperature is preferably 150 °C, and more preferably 200 °C (it is presupposed that the temperature is not lower than the melting point of that one of the two or more polyester resins which has the lowest melting point). The heating temperature may be not lower than the melting point of that one of the two or more polyester resins constituting the material which has the highest melting point. On the other hand, if the heating temperature is too high, bond other than the ester bonds may be cut off. An upper limit of the heating temperature is preferably 300 °C, more preferably 280 °C, and yet more preferably 270 °C.

The shear rate for the decomposition step is preferably 50 to 1,000,000/s. A uniform product may not be obtained if stirring is not performed or if stirring is performed but the shear rate is too low. On the other hand, if the shear rate is too high, bonds other than the ester bond may be cut off. A lower limit of the shear rate is more preferably 100/s, yet more preferably 1,000/s, and still more preferably 10,000/s. An upper limit of shear rate is more preferably 500,000/s, and yet more preferably 300,000/s.

The decomposition time is not limited to any length, and may be not shorter than 1 second and not longer than 12 hours, for example. With a short decomposition period, there is a tendency that a block copolymer with long blocks is obtained; with a long decomposition time, there is a tendency that a block copolymer with short blocks or a random copolymer is obtained. A lower limit of the decomposition time is preferably 3 minutes, more preferably 60 minutes, and yet more preferably 90 minutes. An upper limit of the decomposition time is preferably 8 hours, more preferably 6 hours, and yet more preferably 3 hours. As used herein, "decomposition time" means the sum of the heat-up time and the holding time.

The decomposition step is preferably performed by pressurizing the interior of the chemical reactor. The pressure (gauge pressure) inside the chemical reactor during the decomposition step is preferably 0.15 to 20.0 MPa. A lower limit of the pressure in the chemical reactor is more preferably 0.5 MPa, yet more preferably 1.0 MPa, and still more preferably 3.0 MPa. An upper limit of the pressure in the chemical reactor is more preferably 15.0 MPa, yet more preferably 10.0 MPa, and still more preferably 5.0 MPa.

As discussed above, if an additive is used, small amounts of water adsorbed on the material and/or additive cause decomposition of the polyester resins to progress. If an additive is to be used, it is preferable that the water content represented by the following equation during the decomposition step is not lower than 0.15 % and not higher than 2.0 %: water content = mass of water in chemical reactor/(mass of material + mass of additive + mass of water added from outside) It is to be noted that the mass of water in the chemical reactor is inclusive of the masses of water adsorbed on the material and the additive and the mass of water added from outside, the mass of the material is inclusive of the mass of water adsorbed on the material, and the mass of the additive is inclusive of the mass of water adsorbed on the additive.

If the water content during the decomposition step is too low, decomposition of the polyester resins may not progress even if an additive is used, in which case a polyester copolymer may not be obtained. A lower limit of water content is preferably 0.20 %, and more preferably 0.30 %. On the other hand, if water content is too high, large amounts of energy are required for heating, in which case the advantage of a reduction in water is less significant.

If no additive is used, preferable amounts of water for the decomposition step vary depending on the chemical reactor and reaction conditions. In the case of a chemical reactor where internal volume of chemical reactor > volume of material, it is preferable that, during the decomposition step, {(mass of water in chemical reactor) × (volume of material in chemical reactor) / (internal volume of chemical reactor)} / (mass of material) is not lower than 1.5 %. In the case of a chemical reactor where internal volume of chemical reactor = volume of material (e.g., extruder used as a chemical reactor), it is preferable that, during the decomposition step, (mass of water in chemical reactor) / (mass of material) is not lower than 1.5 %. In each of these cases, the mass of the material is inclusive of the mass of water adsorbed on the material. Here, {(mass of water in chemical reactor) × (volume of material in chemical reactor) / (internal volume of chemical reactor)} approximates the mass of that portion of the water in the chemical reactor which is in contact with the material. In cases where pressure is applied to the material and water is then injected, such as with an extruder, (volume of material in chemical reactor) / (internal volume of chemical reactor) is approximately 1. On the other hand, in cases where the material is placed in the chemical reactor before sealing and water is then injected, or in the case of continuous processing where a mixture of water and the material is injected into a large chemical reactor and the product is removed using a valve, (volume of material in chemical reactor) / (internal volume of chemical reactor) is smaller than 1.

Even in implementations where an additive is used, during the decomposition step, {(mass of water in chemical reactor) × (volume of material in chemical reactor) / (internal volume of chemical reactor)} / (mass of material) or (mass of water in chemical reactor) / (mass of material) may be not lower than 1.5 %.

After the decomposition step (step S4), water in the chemical reactor is discharged at a temperature not lower than 100 °C (step S5). Specifically, for example, water vapor is discharged through a gas outlet port (i.e., vent port) of the chemical reactor. The temperature at which water is discharged is to be not lower than 100 °C, and preferably not lower than (heating temperature - 100 °C), more preferably not lower than (heating temperature - 50 °C), and yet more preferably not lower than (heating temperature - 20 °C).

The step of discharging water in the chemical reactor at a temperature not lower than 100 °C (step S5) is an optional step, and a polyester copolymer may be obtained without this step. It should be noted, however, that the yield of polyester copolymer may decrease if the step of discharging water in the chemical reactor is not performed. Further, as discussed further below, if the polyester copolymer resulting from the decomposition step (step S4) is polymerized to achieve high molecular weight, water must be removed from the decomposition product at some point prior to the high molecular weight process. In view of this, in order to improve efficiency, it is preferable to perform the step of discharging water in the chemical reactor at a temperature not lower than 100 °C (step S5).

A polyester copolymer is produced from the above-described steps. Specifically, a block copolymer or a random copolymer is obtained that has the structural units of the two or more polyester resins loaded as the material.

The chemical reactor used for the method of manufacturing a polyester copolymer according to the present embodiment may be a batch-type reactor, or may be a continuous-type reactor.

If a batch-type reactor is to be used, for example, a material etc. is loaded into the chemical reactor and, while the material is stirred, the temperature in the chemical reactor is raised to heat the material. After completion of the decomposition step (step S4), or after completion of the step of discharging water in the chemical reactor at a temperature not lower than 100 °C (step S5), the decomposition product in the chemical reactor (i.e., polyester copolymer) is retrieved.

A continuous-type chemical reactor includes a loading port and a discharge port for the material and is capable of continuously processing the material. An example of a continuous-type chemical reactor is an extruder. The material etc. loaded through the material-loading port is transported through the chemical reactor, which has a predetermined temperature distribution, while receiving a shearing force by a screw, for example. If the step of discharging water in the chemical reactor at a temperature not lower than 100 °C (step S5) is to be performed, the chemical reactor may be divided into a plurality of zones and water may be discharged at the zone directly before the discharge port.

The method of manufacturing a polyester copolymer according to the first embodiment of the present invention has been described. The method of manufacturing a polyester copolymer according to the present embodiment utilizes the simultaneous decomposition and copolymerization of two or more polyester resins to produce a polyester copolymer. The present embodiment enables producing a polyester copolymer in a shorter period of time than cases where a polyester copolymer is produced from a monomers.

The method of manufacturing a polyester copolymer according to the present embodiment enables producing a copolymer by combining various polyesters. For example, any combination of an aliphatic polyester and an aromatic polyester, which are generally thought to have different reactivities, may be used to produce a copolymer. More specifically, a combination of an aliphatic and an aliphatic polyester, or a combination of an aliphatic and an aromatic polyester, or a combination of an aromatic and an aromatic polyester may be used to produce a copolymer. Further, any combination of a crude oil-derived polyester, a plant-derived polyester, and a half crude oil-derived and a half plant-derived polyester may be used to produce a copolymer.

The method of manufacturing a polyester copolymer according to the present embodiment may enable producing various copolymers, from block copolymers to random copolymers, by varying the decomposition time. Further, the abundance ratio of various structural units in the copolymer may be controlled by varying the ratio between the two or more polyester resins loaded as the material and varying the resins. This enables producing polyester copolymers with a wide range of physical properties. Specifically, glass transition temperature and/or degree of crystallinity may be controlled. Degree of crystallinity may be evaluated based on heat of fusion.

### [Second Embodiment]

FIG. 2 is a flow chart of a method of manufacturing a polyester copolymer according to a second embodiment of the present invention. This manufacturing method is different from the method of manufacturing a polyester copolymer according to the first embodiment (FIG. 1) in the timing of the step of injecting water into the chemical reactor (step S3). While the first embodiment involves injecting water into the chemical reactor before the decomposition step (step S4), the present embodiment involves injecting water into the chemical reactor after initiation of the decomposition step (step S4).

For injection, the amount of water in the chemical reactor may be measured and the amount of water to be injected may be varied based on the measured amount of water. Further, if the amount of water in the chemical reactor is too much, some of the water may be discharged, or a dried gas may be introduced.

The present embodiment, too, enables producing a polyester copolymer in a shorter period of time than in cases where a polyester copolymer is produced from monomers.

It is to be understood that a combination of the first and second embodiments may be carried out. Specifically, water may be injected into the chemical reactor before the decomposition step (step S4) and, in addition, water may be injected into the chemical reactor after initiation of the decomposition step (step S4).

### [Third Embodiment]

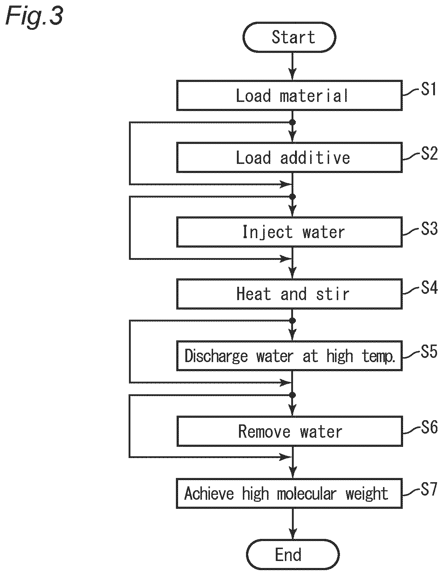

FIG. 3 is a flow chart of a method of manufacturing a polyester copolymer according to a third embodiment of the present invention. In addition to the steps included in the method of manufacturing a polyester copolymer according to the first embodiment (FIG. 1), the present manufacturing method further includes the step of removing water from the decomposition product resulting from the decomposition step (step S4), step S6, and the step of achieving high molecular weight in the decomposition product resulting from the decomposition step (step S4), step S7 (hereinafter referred to as "high molecular weight step"). As discussed above, the decomposition product resulting from the decomposition step (step S4) is a polyester copolymer; further polymerizing this provides a polyester copolymer with high molecular weight.

Water in the decomposition product resulting from the decomposition step (step S4) is removed (step S6). Specifically, for example, water is removed from the decomposition product through filtering or drying. In implementations where the step of discharging water at high temperature (step S5) is performed, the step of removing water from the decomposition product (step S6) may be omitted. In other words, according to the present embodiment, it suffices to perform at least one of the step of discharging water at high temperature (step S5) and the step of removing water from the decomposition product (step S6). In order to improve efficiency, it is preferable to perform the step of discharging water at high temperature (step S5) and omit the step of removing water from the decomposition product (step S6).

The high molecular weight step (step S7) may use any polyester polymerization method. The high molecular weight step may include, for example, the sub-step of reducing the pressure in the polymerization environment and the sub-step of stirring the matter being processed at a predetermined temperature.

The high molecular weight step (step S7) may include the sub-step of adding a catalyst as necessary. The catalyst may be, for example, one or more selected from the group consisting of Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group. Preferable catalysts are Sn, Ti, Zn, and organometallic salts thereof. In implementations where the decomposition step (step S4) uses, as an additive or additives, one or more selected from the group consisting of Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group, the sub-step of adding a catalyst may be omitted from the high molecular weight step (step S7). The polymerization temperature may be 150 to 300 °C, for example. The degree of vacuum may be not higher than 10.0 Pa, for example, more preferably not higher than 5.0 Pa, and yet more preferably not higher than 2.0 Pa. The high molecular weight step (step S7) may further include the sub-step of adding a polymerization initiator to increase molecular weight. The polymerization initiator may be, for example, a monovalent alcohol or a monovalent carboxylic acid.

The high molecular weight step (step S7) may be performed by the chemical reactor used for the decomposition step (step S4), or may be performed by another chemical reactor, different from the one used for the decomposition step (step S4). In order to improve efficiency, it is preferable to use the chemical reactor used for the decomposition step (step S4). Furthermore, it is preferable to continuously perform the decomposition step (step S4) and the high molecule weight step (step S7), without allowing the temperature in the chemical reactor to drop from the heating temperature at the decomposition step to room temperature. Moreover, if the chemical reactor is a continuous-type reactor, it is preferable that the device is constructed to perform the step of loading the material (step S1) to the high molecular weight step (step S7) in a continuous manner.

Use of an additive containing either an alkali metal or an alkaline earth metal at in the decomposition step (step S4) leads to saponification, making it difficult to achieve high molecular weight. In view of this, in implementations where the high molecular weight step (step S7) is performed and if an additive is used at the decomposition step (step S4), it is preferable to use an additive containing neither an alkali metal nor an alkaline earth metal. Specifically, it is preferable to use one or more selected from the group consisting of Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group.

The method of manufacturing a polyester copolymer according to the third embodiment of the present invention has been described. The present embodiment enables achieving high molecular weight in the polyester copolymer obtained from the first embodiment.

### [Fourth Embodiment]

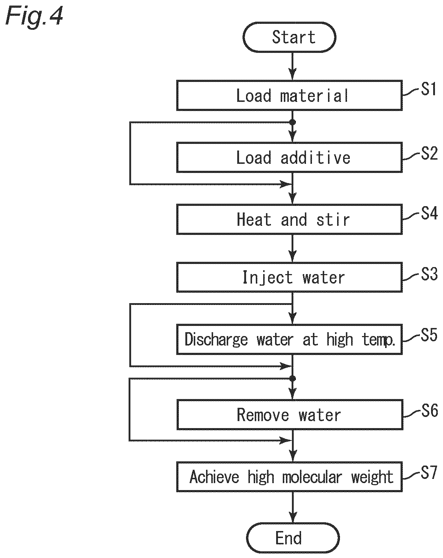

FIG. 4 is a flow chart of a method of manufacturing a polyester copolymer according to a fourth embodiment of the present invention. In addition to the steps included in the method of manufacturing a polyester copolymer according to the second embodiment (FIG. 2), the present manufacturing method further includes the step of removing water from the decomposition product resulting from the decomposition step (step S4), step S6, and the step of achieving high molecular weight in the decomposition product resulting from the decomposed step (step S4), step S7. As discussed above, the decomposition product resulting from the decomposition step (step S4) is a polyester copolymer; further polymerizing this provides a polyester copolymer with high molecular weight.

The present embodiment, too, achieves high molecular weight in a polyester copolymer. It is to be understood that a combination of the third and fourth embodiments may be carried out. Specifically, water may be injected into the chemical reactor before the decomposition step (step S4) and, in addition, water may be injected into the chemical reactor after initiation of the decomposition step (step S4).

### EXAMPLES

The present invention will now be described more specifically using examples. The present invention is not limited to these examples.

### [Decomposition Only]

Polyester resins were decomposed under the conditions shown in Tables 1 to 3.

### [Table 1]

**TABLE 1**

| | | Inv. ex. 1 | Inv. ex. 2 | Inv. ex. 3 | Inv. ex. 4 | Inv. ex. 5 | Inv. ex. 6 | Inv. ex. 7 | Inv. ex. 8 | Inv. ex. 9 |
|---|---|---|---|---|---|---|---|---|---|---|
| | Resin to be mixed 1 | PLA | PLA | PBT | PLA | PLA | PLA | PLA | PLA | PLA |
| | Resin to be mixed 2 | PBSA | PBT | PEN | PBS | PBS | PBSA | PBSA | PBSA | PBSA |
| | Resin to be mixed 3 | - | - | - | PEN | PEN | - | - | - | - |
| | Resin to be mixed 4 | - | - | - | PBT | PBT | - | - | - | - |
| | Additive | Na carbonate | Na carbonate | Na carbonate | Na carbonate | Na carbonate | Sn | - | Na carbonate | Zn |
| Decomposition conditions | Amount of additive / phr | 10 | 10 | 10 | 10 | 11 | 10 | - | 10 | 10 |
| | Inject water | yes | yes | yes | yes | yes | yes | yes | no | no |
| | Water / % | 1.9 | 1.9 | 1.9 | 1.9 | 1.9 | 1.9 | 1.9 | 0.35 | 0.35 |
| | Decomposition temp. / °C | 250 | 250 | 250 | 250 | 200 | 250 | 250 | 250 | 250 |
| | Decomposition reaction time / min | 90 | 90 | 90 | 90 | 90 | 90 | 90 | 90 | 90 |
| | Shear rate γ (1/s) | 25133 | 25133 | 25133 | 25133 | 25133 | 25133 | 25133 | 25133 | 25133 |
| | Discharge at high temp. | yes | yes | yes | yes | yes | yes | yes | yes | yes |
| Results | Copolymer | yes | yes | yes | yes | yes | yes | yes | yes | yes |
| | Molecular weight (Mn) | 512 | 523 | 534 | 543 | 576 | 596 | 523 | 3474 | 4621 |

### [Table 2]

**TABLE 2**

| | | Inv. ex. 10 | Inv. ex. 11 | Inv. ex. 12 | Inv. ex. 13 | Inv. ex. 14 | Inv. ex. 15 | Inv. ex. 16 | Inv. ex. 17 |
|---|---|---|---|---|---|---|---|---|---|
| | Resin to be mixed 1 | PLA | PLA | PLA | PLA | PLA | PLA | PLA | PLA |
| | Resin to be mixed 2 | PBSA | PBSA | PBSA | PBSA | PBSA | PCL | PCL | PCL |
| | Resin to be mixed 3 | - | - | - | - | - | - | - | - |
| | Resin to be mixed 4 | - | - | - | - | - | - | - | - |
| | Additive | Na carbonate | Na carbonate | Na carbonate | Na carbonate | Na carbonate | Na carbonate | - | Sn octylate |
| Decomposition conditions | Amount of additive / phr | 10 | 10 | 11 | 11 | 12 | 10 | - | 10 |
| | Inject water | yes | yes | yes | yes | yes | yes | yes | yes |
| | Water / % | 1.8 | 1.9 | 1.9 | 1.9 | 1.9 | 1.9 | 1.9 | 1.90 |
| | Decomposition temp. / °C | 250 | 250 | 250 | 250 | 250 | 250 | 250 | 250 |
| | Decomposition reaction time / min | 90 | 90 | 90 | 3 | 60 | 90 | 90 | 90 |
| | Shear rate γ (1/s) | 25,133 | 100 | 200,000 | 25,133 | 25,133 | 25,133 | 25,133 | 25,133 |
| | Discharge at high temp. | no | yes | yes | no | yes | yes | yes | yes |
| Results | Copolymer | yes | yes | yes | yes | yes | yes | yes | yes |
| | Molecular weight (Mn) | 563 | 512 | 634 | 4,235 | 514 | 460 | 644 | 435 |

### [Table 3]

**TABLE 8**

| | | Inv. ex. 18 | Inv. ex. 19 | Inv. ex. 20 | Inv. ex. 21 | Comp. ex. 1 | Comp. ex. 2 | Comp. ex. 3 |
|---|---|---|---|---|---|---|---|---|
| | Resin to be mixed 1 | PLA | PLA | PLA | PLA | PLA | PLA | PLA |
| | Resin to be mixed 2 | PCL | PCL | PCL | PBAT | PBSA | PBSA | PBSA |
| | Resin to be mixed 3 | - | - | - | - | - | - | - |
| | Resin to be mixed 4 | - | - | - | - | - | - | - |
| | Additive | Sn | pentaerythritol | PVA | Na carbonate | Na carbonate | Na carbonate | - |
| Decomposition conditions | Amount of additive / phr | 10 | 10 | 10 | 10 | 10 | 10 | - |
| | Inject water | yes | yes | yes | yes | yes | yes | no |
| | Water / % | 1.9 | 1.9 | 1.9 | 1.9 | 1.9 | 1.9 | 0.35 |
| | Decomposition temp. / °C | 250 | 250 | 250 | 250 | 250 | 90 | 250 |
| | Decomposition reaction time / min | 90 | 90 | 90 | 90 | 90 | 90 | 90 |
| | Shear rate γ (1/s) | 25,133 | 25,133 | 25,133 | 25,133 | 2,500,000 | 25,133 | 25,133 |
| | Discharge at high temp. | yes | yes | yes | yes | yes | yes | yes |
| Results | Copolymer | yes | yes | yes | yes | no | no | no |
| | Molecular weight (Mn) | 643 | 462 | 865 | 521 | - | - | - |

For each of the inventive and comparative examples, a plurality of resins was loaded in an equal mass (i.e., 50:50 or 25:25:25:25). The physical properties of the various resins are shown in Table 4. "Tg" means glass transition temperature, Mn means number average molecular weight, and Mw means weight average molecular weight.

### [Table 4]

**TABLE 4**

| | PLA | PBS | PBSA | PEN | PBT | PCL | PBAT |
|---|---|---|---|---|---|---|---|
| Melting point / °C | 170 | 120 | 90 | 265 | 203 | 60 | 130 |
| Tg / °C | 60 | -20 | -40 | 120 | 50 | -60 | 110 |
| Mn | 78,000 | 38,000 | 40,000 | 50,000 | 25,000 | 15,000 | 44,000 |
| Mw | 120,000 | 110,000 | 123,000 | 70,000 | 45,000 | 25,000 | 53,000 |

The chemical reactor used was a batch-type reactor where the internal volume of the reactor was larger than the volume of the material. For inventive examples 1 to 9, 11, 12 and 15 to 21 as well as comparative examples 1 to 3, the temperature was raised to the decomposition temperature in 60 minutes and then held at the decomposition temperature for 30 minutes. For inventive example 14, the temperature was raised to the decomposition temperature in 60 minutes and, immediately thereafter, water was discharged. For inventive example 10, a small chemical reactor was immersed in a salt bath at 250 °C to raise the temperature to 250 °C in a short period of time and was held for 90 minutes. For inventive example 13, a small chemical reactor was immersed in a salt bath at 250 °C to raise the temperature to 250 °C in a short period of time and was held for 3 minutes. Except for inventive examples 10 and 13, the vent port was opened at the decomposition temperature to discharge water.

In Tables 1 to 3, the value in an entry in the "Water" row for an inventive or comparative example with "yes" for water injection indicates {(mass of water in chemical reactor) × (volume of material in chemical reactor) / (internal volume of chemical reactor)} / (mass of material), and the value in an entry in the "Water" row for an inventive or comparative example with "no" for water injection indicates (mass of water in chemical reactor) / (mass of material + mass of additive + mass of water added from outside).

After completion of the decomposition, the decomposition product was analyzed by liquid chromatography-mass spectrometry (LCMS) and nuclear magnetic resonance (NMR) to determine the presence/absence of a copolymer. For a decomposition product having a copolymer, the number average molecular weight was measured by gel permeation chromatography (GPC).

The resin materials for inventive example 1 were PLA (aliphatic polyester) and PBSA (aliphatic polyester); the resin materials for inventive example 2 were PLA (aliphatic polyester) and PBT (aromatic polyester); and the resin materials for inventive example 3 were PBT (aromatic polyester) and PEN (aromatic polyester). It was determined that copolymers can be obtained from all of these combinations. It was also determined that copolymers can be obtained from three or more polyester resins, as shown by inventive examples 4 and 5.

For inventive example 6, Sn was used as an additive. For inventive example 7, no additive was used. For inventive example 8, sodium carbonate was used as an additive, where no water was intentionally injected and decomposition occurred only with water adsorbed on the material, for example. For inventive example 9, Zn was used as an additive, where no water was intentionally injected and decomposition occurred only with water adsorbed on the material, for example. For inventive example 10, the step of discharging at high temperature was not performed. Inventive example 11 is an example for a low shear rate. Inventive example 12 is an example for a high shear rate. It was determined that copolymers can be obtained from all of these examples.

Inventive example 13 is an example for a short decomposition reaction time. A block copolymer with a relatively high molecular weight was obtained from this example. On the other hand, a random copolymer with a relatively low molecular weight was obtained from inventive example 14.

For inventive examples 15 to 20, the resin materials were PLA and PCL; for inventive example 21, the resin materials were PLA and PBAT. It was determined that copolymers can be obtained from all of these examples.

No copolymers were obtained from comparative examples 1 to 3. This is presumably because, for comparative example 1, the shear rate was too high; for comparative example 2, the decomposition temperature was too low; and for comparative example 3, no additive was used and the amount of water was too small.

### [Decomposition and Polymerization (with High Molecular Weight)]

Polyester resins were decomposed and polymerized (to achieve high molecular weight) under the conditions shown in Table 5.

### [Table 5]

**TABLE 5**

| | | Inv. ex. 1 | Inv. ex. 2 | Inv. ex. 3 | Inv. ex. 4 | Inv. ex. 5 | Inv. ex. 6 | Inv. ex. 7 | Inv. ex. 8 | Inv. ex. 9 | Inv. ex. 10 | Inv. ex. 11 |
|---|---|---|---|---|---|---|---|---|---|---|---|---|
| | Resin to be mixed 1 | PLA | PLA | PLA | PLA | PLA | PBT | PLA | PLA | PLA | PLA | PLA |
| | Resin to be mixed 2 | PBSA | PBSA | PBSA | PBSA | PBSA | PEN | PBS | PBT | PBSA | PBSA | PCL |
| | Resin to be mixed 3 | - | - | - | - | - | - | PEN | - | - | - | - |
| | Resin to be mixed 4 | - | - | - | - | - | - | PBT | - | - | - | - |
| Decomposition conditions | Additive | Na carbonate | Sn | Zn | Na carbonate | - | - | - | - | - | - | - |
| | Amount of additive / phr | 10 | 10 | 10 | 10 | - | - | - | - | - | - | - |
| | Inject water | yes | yes | no | no | yes | yes | yes | yes | yes | yes | yes |
| | Water / % | 1.9 | 1.9 | 0.35 | 0.35 | 1.9 | 1.9 | 1.9 | 1.9 | 1.9 | 1.9 | 1.9 |
| | Decomposition temp. / °C | 250 | 250 | 250 | 250 | 250 | 250 | 250 | 250 | 250 | 250 | 250 |
| | Decomposition reaction time /min | 90 | 90 | 90 | 90 | 90 | 90 | 90 | 90 | 3 | 90 | 90 |
| | Shear rate γ (1/s) | 25,133 | 25,133 | 25,133 | 25,133 | 25,133 | 25,133 | 25,133 | 25,133 | 25,133 | 25,133 | 25,133 |
| | Discharge at high temp. | yes | yes | yes | yes | yes | yes | yes | yes | no | no | yes |
| Polymerization conditions | Catalyst | Sn octylate | Sn octylate | Sn octylate | Sn octylate | Sn octylate | Sn octylate | Sn octylate | Sn octylate | Sn octylate | Sn octylate | Sn octylate |
| | Amount of catalyst / phr | 1 | 1 | 1 | 1 | 1 | 1 | 1 | 1 | 1 | 1 | 1 |
| | Polymerization temp. / °C | 230 | 230 | 230 | 230 | 230 | 230 | 230 | 230 | 230 | 230 | 230 |
| | Polymerization time / min | 360 | 360 | 360 | 360 | 360 | 360 | 360 | 360 | 360 | 360 | 360 |
| | Degree of vacuum / MPa | -0.1 | -0.1 | -0.1 | -0.1 | -0.1 | -0.1 | -0.1 | -0.1 | -0.1 | 0.0 | 0.0 |
| | Shear rate γ (1/s) | 25,133 | 25,133 | 25,133 | 25,133 | 25,133 | 25,133 | 25,133 | 25,133 | 25,133 | 25,133 | 25,133 |
| Results | Copolymer | yes | yes | yes | yes | yes | yes | yes | yes | yes | yes | yes |
| | Molecular weight (Mn) | 576 | 11,463 | 16,435 | 734 | 14,424 | 13,524 | 16,424 | 13,524 | 15,324 | 2,132 | 12,421 |
| | Tg | - | 1.17 | 1.17 | - | 1.17 | 78.70 | 43.40 | 54.92 | 1.17 | 1.17 | -13.00 |
| | Heat of fusion (J/g) | - | - | - | - | - | - | - | - | 1.155 | - | - |

Except for inventive examples 9 and 10, decomposition and polymerization were continuously performed. In other words, water was discharged at the decomposition temperature and, thereafter, a catalyst was loaded and the pressure in the chemical reactor was reduced before the temperature was changed to the polymerization temperature (i.e., 230 °C) without allowing the temperature to drop from the decomposition temperature (250 °C) to room temperature, thus performing polymerization. For inventive examples 9 and 10, after decomposition, the temperature was allowed to drop to room temperature and the decomposition product was removed before polymerization. Further, for inventive example 10, polymerization was performed without creating a vacuum.

After completion of the polymerization, the product was analyzed by LCMS and NMR to determine whether a copolymeric structure was maintained after polymerization. Further, the number average molecular weight was measured by GPC. For a product with high molecular weight, the glass transition temperature was measured by differential scanning calorimetry (DSC).

For each of inventive examples 1 and 4, a copolymer was present but the molecular weight was not significantly higher. This is presumably because an additive containing an alkali metal had been used. In contrast, a copolymer with high molecular weight was obtained from each of inventive examples 2 and 3, for which an additive containing neither an alkali metal nor an alkaline earth metal had been used.

The resin materials for inventive example 5 were PLA (aliphatic polyester) and PBSA (aliphatic polyester); the resin materials for inventive example 6 were PBT (aromatic polyester) and PEN (aromatic polyester); the resin materials for inventive example 8 were PLA (aliphatic polyester) and PBT (aromatic polyester); and the resin materials for inventive example 11 were PLA (aliphatic polyester) and PCL (aliphatic polyester). It was determined that copolymers with high molecular weight can be obtained from all of these combinations. Further, as shown by inventive example 7, it was determined that a copolymer with high molecular weight can be obtained from three or more polyester resins. Furthermore, it was determined that the glass transition temperature can be varied across a wide range.

The heat of fusion of the product of inventive example 9 was measured by DSC. The degree of crystallinity can be evaluated by using the heat of fusion as an indicator. The heat of fusion of PLA is 30.669 J/g, while the heat of fusion of PBS is 38.025 J/g. The heat of fusion of the product obtained through polymerization was 1.155 J/g, which demonstrates that the degree of crystallinity can be controlled through copolymerization.

For inventive example 10, a copolymer was present but the molecular weight was not significantly higher. This is presumably because no vacuum was created and water in the system was not sufficiently removed such that condensation reaction was not predominant during the equilibrium reaction.

Although embodiments of the present invention have been described, the present invention is not limited to the above-described embodiments only, and various modifications are possible within the scope of the invention.

## Claims

1. A method of manufacturing a polyester copolymer, comprising:
loading a chemical reactor with a material containing a first polyester resin and a second polyester resin, the second polyester resin being a polyester resin different from the first polyester resin; and
heating the material to a temperature not lower than a melting point of that one of the polyester resins contained in the material which has the lowest melting point, and stirring the material.

2. The method of manufacturing a polyester copolymer according to claim 1, further comprising:
loading the chemical reactor with an additive for promoting decomposition of a polyester resin.

3. The method of manufacturing a polyester copolymer according to claim 1, wherein:
if the chemical reactor is a chemical reactor where internal volume of chemical reactor > volume of material, then, during the stirring, {(mass of water in chemical reactor) × (volume of material in chemical reactor) / (internal volume of chemical reactor)} / (mass of material) is not lower than 1.5 %; and
if the chemical reactor is a chemical reactor where internal volume of chemical reactor = volume of material, then, during the stirring, (mass of water in chemical reactor) / (mass of material) is not lower than 1.5 %,
where the mass of the material is inclusive of a mass of water adsorbed on the material.

4. The method of manufacturing a polyester copolymer according to claim 2, wherein:
if the chemical reactor is a chemical reactor where internal volume of chemical reactor > volume of material, then, during the stirring, {(mass of water in chemical reactor) × (volume of material in chemical reactor) / (internal volume of chemical reactor)} / (mass of material) is not lower than 1.5 %; and
if the chemical reactor is a chemical reactor where internal volume of chemical reactor = volume of material, then, during the stirring, (mass of water in chemical reactor) / (mass of material) is not lower than 1.5 %,
where the mass of the material is inclusive of a mass of water adsorbed on the material.

5. The method of manufacturing a polyester copolymer according to claim 2, wherein, during the stirring, a water content represented by the following equation is not lower than 0.15 % and not higher than 2.0 %: water content = mass of water in chemical reactor/ (mass of material + mass of additive + mass of water added from outside), where the mass of water in the chemical reactor is inclusive of masses of water adsorbed on the material and the additive and a mass of water added from outside, the mass of the material is inclusive of the mass of water adsorbed on the material, and the mass of the additive is inclusive of the mass of water adsorbed on the additive.

6. The method of manufacturing a polyester copolymer according to any one of claims 1 to 5, wherein a shear rate for the stirring is 50 to 1,000,000/s.

7. The method of manufacturing a polyester copolymer according to any one of claims 1 to 5, further comprising:
after the stirring, discharging water in the chemical reactor at a temperature not lower than 100 °C.

8. The method of manufacturing a polyester copolymer according to any one of claims 1 to 5, wherein the first polyester resin is a polyester resin where an ester bond and an aromatic ring constituting a main chain of the polyester have no resonance structure.

9. The method of manufacturing a polyester copolymer according to claim 8, wherein the first polyester resin is polylactic acid (PLA), polybutylene succinate (PBS), polybutylene succinate adipate (PBSA), polycaprolactone (PCL), polyhydroxybutyric acid (PHB), polyhydroxyalkanoate (PHA), polyglycolic acid (PGA), or 3-hydroxybutyrate-co-3-hydroxyhexanoate polymer (PHBH).

10. The method of manufacturing a polyester copolymer according to claim 8, wherein the first polyester resin is polylactic acid (PLA), polybutylene succinate (PBS), polybutylene succinate adipate (PBSA), or polycaprolactone (PCL).

11. The method of manufacturing a polyester copolymer according to claim 8, wherein the second polyester resin is a polyester resin where an ester bond and an aromatic ring constituting a main chain of the polyester have a resonance structure.

12. The method of manufacturing a polyester copolymer according to claim 11, wherein the second polyester resin is polyethylene terephthalate (PET), polybutylene terephthalate (PBT), polyethylene naphthalate (PEN), or polybutylene adipate naphthalate (PBAT).

13. The method of manufacturing a polyester copolymer according to claim 2, 4 or 5, wherein the additive is one or two selected from the group consisting of an alkali metal salt, an alkaline earth metal salt, an oxide of an alkali metal, an oxide of an alkaline earth metal, Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group.

14. The method of manufacturing a polyester copolymer according to claim 13, wherein the additive is one or more selected from the group consisting of Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, an organometallic salt of Ti, and a compound containing a hydroxyl group.

15. The method of manufacturing a polyester copolymer according to claim 14, wherein the additive is one or more selected of the group consisting of Zn, Sn, Fe, Al, Ti, a Zn oxide, an Sn oxide, an Fe oxide, an Al oxide, a Ti oxide, an organometallic salt of Zn, an organometallic salt of Sn, an organometallic salt of Fe, an organometallic salt of Al, and an organometallic salt of Ti.

16. The method of manufacturing a polyester copolymer according to any one of claims 1 to 5, further comprising:
removing water from a decomposition product resulting from the stirring; and
achieving high molecular weight in the decomposition product resulting from the stirring.

17. The method of manufacturing a polyester copolymer according to claim 16, wherein:
the achieving of high molecular weight includes:
reducing a pressure in a polymerization environment; and
stirring a matter being processed at a predetermined temperature.

18. The method of manufacturing a polyester copolymer according to claim 7, further comprising:
achieving high molecular weight in the decomposition product resulting from the stirring.

19. The method of manufacturing a polyester copolymer according to claim 18, wherein:
the achieving of high molecular weight includes:
reducing a pressure in a polymerization environment; and
stirring a matter being processed at a predetermined temperature.
